# EUROPÄISCHE PATENTSCHRIFT

(11) **EP 4 389 649 B1**
(45) Veröffentlichungstag und Bekanntmachung des Hinweises auf die Patenterteilung: **08.07.2026**
(21) Anmeldenummer: 22215746.3
(22) Anmeldetag: 22.12.2022
(51) Int. Cl.: B65G 17/12, B65G 17/34, B65G 47/96, B65G 47/66

(54) **STEIGESORTER UND VERFAHREN ZUM TRANSPORTIEREN EINES GEGENSTANDS**
CLIMBING SORTER AND METHOD FOR TRANSPORTING AN OBJECT
TRIEUR DE CAGE ET PROCÉDÉ DE TRANSPORT D'UN OBJET

(43) Veröffentlichungstag der Anmeldung: 26.06.2024
(73) Patentinhaber: BEUMER Group GmbH & Co. KG, 59269 Beckum (DE)
(72) Erfinder: Dirkmann, Markus, 59302 Oelde (DE); Heber, Frank, 48145 Münster (DE)
(74) Vertreter: Angerhausen, Christoph

(56) Entgegenhaltungen:
- EP-A1- 3 901 068
- CN-A- 111 776 631
- CN-A- 115 285 593
- DE-B3- 102018 009 974
- US-A- 3 788 453
- US-A- 4 501 350

## Beschreibung

Die Erfindung betrifft einen Steigsorter zum Transport von Gegenständen, der eine Laufschiene und eine Mehrzahl entlang der Laufschiene in eine Transportrichtung verfahrbare Lastaufnahmemittel aufweist, wobei der Steigesorter einen Steigabschnitt, in dem die Laufschiene in Transportrichtung von einer ersten Höhe auf eine zweite Höhe, die über der ersten Höhe liegt, geführt ist, und/oder einen Gefälleabschnitt, in dem die Laufschiene in Transportrichtung von einer dritten Höhe auf eine vierte Höhe, die unter der dritten Höhe liegt, geführt ist, aufweist. Derartige Steigesorter werden beispielsweise in Logistikzentren eingesetzt, um Pakete zu transportieren. Ein Steigesorter ist beispielsweise aus der EP 3 885 288 A1 oder der EP 3 927 622 A1 bekannt. Die Erfindung betrifft weiterhin ein Verfahren zum Transportieren eines Gegenstands mit einem Steigsorter.

Ein Steigesorter mit den Merkmalen des Oberbegriffs ist aus der EP 3 901 068 A1 bekannt. Ein geneigter Förderer ist aus der US 3,788,753 bekannt. Die DE 10 2018 009 974 B3 offenbart einen Förderer, welcher Transportgut horizontal transportiert und wobei deplatziertes Fördergut durch eine Abblasvorrichtung aus dem Förderer hinausgeblasen wird.

Steigesorter weisen üblicherweise Lastaufnahmemittel auf, die entlang einer Laufschiene verfahrbar sind bzw. verfahren werden. Der Steigesorter kann ein Quergurtsorter sein, bei dem die Lastaufnahmemittel einen Gurtförderer aufweisen, der quer zur Transportrichtung bzw. zur Laufschiene angeordnet sein kann. Bekannt sind auch Kippschalensorter, bei denen die Lastaufnahmemittel Kippschalen aufweisen.

Problematisch ist häufig, dass in dem Steigabschnitt des Steigesorters die von den Lastaufnahmemitteln transportierten Gegenstände rutschen können, und je nach Abmessung in den Zwischenraum zwischen zwei Lastaufnahmemittel gelangen können. Dadurch können die Gegenstände beschädigt werden, und ggf. auch die Lastaufnahmemittel blockieren oder an ihrer Fahrt hindern. Zudem können in dem Zwischenraum befindliche Gegenstände beim Übergang vom Steigabschnitt in einen Flachabschnitt, oder generell bei einer Änderung der Steigung der Laufschiene, wie in einem Nussknacker von den Lastaufnahmemitteln gequetscht werden.

Es ist deshalb Aufgabe der vorliegenden Erfindung, einen Steigesorter und ein Verfahren zum Transport bereitzustellen, mit dem die Gegenstände im Steigbereich sicher transportiert werden können. Diese Aufgabe wird durch einen Steigsorter mit den Merkmalen des Anspruchs 1 sowie ein Verfahren mit den Merkmalen des Anspruchs 17 gelöst. Die Unteransprüche betreffen jeweils bevorzugte Ausführungsformen.

Erfindungsgemäß ist zwischen zwei aufeinanderfolgenden Lastaufnahmemitteln eine flexible Zwischenabdeckung angeordnet und an diesen befestigt, wobei die Lastaufnahmemittel mit der flexiblen Zwischenabdeckung in dem Steigabschnitt und/oder dem Gefälleabschnitt eine Treppenstruktur bilden.

Die flexible Zwischenabdeckung kann zwischen zwei benachbarten Fahrwagen angeordnet und/oder an zwei benachbarten Fahrwagen befestigt sein. Die flexible kann an jeweiligen Fahrwagen zweier benachbarter Lastaufnahmemittel befestigt und/oder angeordnet sein. Es kann vorgesehen sein, dass zwischen jeden zwei benachbarten Lastaufnahmemitteln und/oder Fahrwagen eine jeweilige flexible Zwischenabdeckung angeordnet sein kann.

Die Treppenstruktur kann eine oder mehrere Stufen, und/oder eine oder mehrere Setzstufen aufweisen. Es kann vorgesehen sein, dass eine Treppenstruktur in einem oder dem Steigabschnitt gebildet sein oder werden kann, wenn sich mindestens ein Lastaufnahmemittel in dem Steigabschnitt befindet. Es kann vorgesehen sein, dass eine Treppenstruktur in einem oder dem Gefälleabschnitt gebildet sein oder werden kann, wenn sich mindestens ein Lastaufnahmemittel in dem Gefälleabschnitt befindet.

Die Lastaufnahmemittel können jeweils eine Stufe der Treppenstruktur bilden. Befindet sich ein Lastaufnahmemittel in dem Stegabschnitt oder dem Gefälleabschnitt, so kann das Lastaufnahmemittel eine Stufe der Treppenstruktur sein oder bilden. Die flexible Zwischenabdeckung kann eine Setzstufe der Treppenstruktur bilden. Befindet sich eine oder die flexible Zwischenabdeckung in dem Stegabschnitt oder dem Gefälleabschnitt, so kann die flexible Zwischenabdeckung eine Setzstufe der Treppenstruktur sein oder bilden.

Die Setzstufe kann im Wesentlichen vertikal und/oder senkrecht, angeordnet sein und/oder im Wesentlichen in eine vertikale Richtung verlaufen. Die Setzstufe kann unter einem Winkel verlaufen, z.B. unter einem Winkel zur Vertikalen. Die Setzstufe kann zwei Stufen der Treppenstruktur verbinden, und/oder zwischen zwei Stufen der Treppenstruktur angeordnet sein. Eine Stufe kann in einer Höhe und/oder Ebene angeordnet sein, die über einer Höhe und/oder Ebene einer benachbarten und/oder anderen Stufe liegen kann. Die Setzstufe kann eine weiter unten liegende mit einer weiter oben liegenden Stufe verbinden, und/oder zwischen einer weiter unten liegenden und einer weiter oberen liegenden Stufe angeordnet sein. Eine, mehrere oder alle Stufen können im Wesentlichen horizontal angeordnet sein und/oder sich im Wesentlichen in eine horizontale Richtung erstrecken. Eine, mehrere oder alle Stufen können aber alternativ oder zusätzlich geneigt sein, z.B. zur Horizontalen, und/oder unter einem Winkel zur Horizontalen verlaufen.

Der Steigesorter kann einen Flachabschnitt, in dem die Laufschiene im Wesentlichen flach verlaufen kann, aufweisen. Der Flachabschnitt kann im Wesentlichen in einer horizontalen Ebene und/oder in horizontale Richtung angeordnet sein und/oder verlaufen. Die flexible Zwischenabdeckung kann durchhängen und/oder eine Mulde bildet, wenn sich die zwei Lastaufnahmemittel in dem Flachabschnitt befinden., Die flexible Zwischenabdeckung kann auseinandergezogen sein, wenn sich die zwei Lastaufnahmemittel im Steigabschnitt und/oder Gefälleabschnitt befinden.

Die flexible Zwischenabdeckung kann dazu eingerichtet sein, bei oder nach dem Übergang zwischen Flachabschnitt und Steigabschnitt einen zumindest teilweise in der flexiblen Zwischenabdeckung, bevorzugt der Mulde, aufgenommenen Gegenstand auf das der flexiblen Zwischenabdeckung in Transportrichtung nachgelagerte Lastaufnahmemittel zu schieben. Die flexible Zwischenabdeckung kann dazu eingerichtet sein, bei oder nach dem Übergang zwischen Flachabschnitt und Steigabschnitt einen zumindest teilweise über die flexible Zwischenabdeckung überstehenden Gegenstand auf das der flexiblen Zwischenabdeckung in Transportrichtung nachgelagerte Lastaufnahmemittel zu schieben.

Dadurch, dass die flexible Zwischenabdeckung in dem Flachabschnitt durchhängt und/oder eine Mulde bildet, und in dem Steigabschnitt auseinandergezogen ist, ein sich in dem Flachabschnitt zumindest teilweise in der Mulde befindliche Gegenstand, oder ein in dem Flachabschnitt über die Mulde und/oder die flexible Zwischenabdeckung überstehender Gegenstand, der Gegenstand beim Auseinanderziehen der flexiblen Zwischenabdeckung entgegen der Transportrichtung in Richtung des der flexiblen Zwischenabdeckung nachgelagerten Lastaufnahmemittels und/oder auf das der flexiblen Zwischenabdeckung nachgelagerte Lastaufnahmemittel zurückgeschoben. Damit wird ein Einklemmen des Gegenstands zwischen zwei benachbarten Lastaufnahmemitteln, insbesondere bei Änderungen der Steigung der Laufschiene, verhindert.

Das Lastaufnahmemittel kann einen Fahrwagen aufweisen. Der Fahrwagen kann in und/oder von der Laufschiene geführt sein oder werden. In einigen Ausführungsformen kann vorgesehen sein, dass eines, mehrere oder alle Lastaufnahmemittel und/oder der Fahrwagen mit einer Förderkette gekoppelt sein kann. Durch eine Bewegung der Förderkette kann das Lastaufnahmemittel und/oder der Fahrwagen bewegt sein oder werden. Die Förderkette kann in der Laufschiene angeordnet sein.

Der Gegenstand kann eine Postwurfsendung, ein Paket, ein Päckchen, ein Sack, ein Beutel, eine Verpackung, eine Tasche, eine Kartonage oder dergleichen sein oder aufweisen.

Die flexible Zwischenabdeckung kann den Zwischenraum zwischen zwei Lastaufnahmemitteln abdecken. Die flexible Zwischenabdeckung kann biegsam, und/oder elastisch sein, und/oder formveränderbar sein.

Mindestens eines, mehrere oder alle der Lastaufnahmemittel kann einen Gurtförderer quer zur Laufschiene und/oder quer zur Transportrichtung sein oder aufweisen. Das Lastaufnahmemittel kann ein Lastaufnahmemittel eines Quergurtsorters sein. Mindestens eines, mehrere oder alle der Lastaufnahmemittel kann eine Kippschale sein oder aufweist. Das Lastaufnahmemittel kann ein Lastaufnahmemittel eines Kippschalensorters sein. Das Lastaufnahmemittel kann einen Aufnahmebereich aufweisen, der einen Gegenstand halten, stützen und/oder aufnehmen kann. Der Gurtförderer und/oder die Kippschale kann ein Aufnahmebereich des Lastaufnahmemittels sein.

Die flexible Zwischenabdeckung kann ein Tuch sein oder aufweisen, Die flexible Zwischenabdeckung kann ein Stoffelement, beispielsweise ein Gewirk, ein Gewebe, ein Gestrick oder ein Vlies sein oder aufweisen. Die flexible Zwischenabdeckung kann Naturfasern und/oder Kunststofffasern aufweisen, oder aus solchen bestehen. Die flexible Zwischenabdeckung kann ein Kunststoffelement sein oder aufweisen. Die flexible Zwischenabdeckung kann einen Stretchstoff aufweisen, und/oder aus einem solchen bestehen. Die flexible Zwischenabdeckung kann formveränderbar, dehnbar, und/oder elastisch sein.

Die flexible Zwischenabdeckung kann derart dimensioniert sein, dass es die Laufschiene nicht berührt, wenn die flexible Zwischenabdeckung durchhängt und/oder eine Mulde bildet. Die flexible Zwischenabdeckung kann in dem Steigabschnitt gespannt und/oder im Wesentlichen vertikal ausgerichtet sein.

In einigen Ausführungsformen, in denen der Steigesorter einen Gefälleabschnitt aufweisen kann, kann die flexible Zwischenabdeckung in dem Gefälleabschnitt gespannt und/oder im Wesentlichen vertikal ausgerichtet sein.

Die flexible Zwischenabdeckung kann quer zur Transportrichtung derart dimensioniert sein, dass die flexible Zwischenabdeckung die Laufschiene überdecken kann. Die flexible Zwischenabdeckung kann parallel zu den Lastaufnahmemitteln derart dimensioniert sein, dass die flexible Zwischenabdeckung die Laufschiene überdecken kann. In einigen Ausführungsformen kann die flexible Zwischenabdeckung die Laufschiene quer zur Transportrichtung vollständig überdecken.

Mindestens eines der Lastaufnahmemittel kann eine Befestigungsschiene aufweisen, an oder mit der die flexible Zwischenabdeckung befestigt sein kann. Es kann vorgesehen, dass mindestens einer der Fahrwagen eine Befestigungsschiene aufweisen kann, an oder mit der die flexible Zwischenabdeckung befestigt sein kann. Damit kann die flexible Zwischenabdeckung einfach und unkompliziert demontiert und/oder ausgetauscht sein oder werden.

Mindestens eines der Lastaufnahmemittel kann eine Aufwickelvorrichtung aufweisen, an oder mit der die flexible Zwischenabdeckung befestigt sein kann, so dass die flexible Zwischenabdeckung zumindest teilweise aufwickelbar und/oder zumindest teilweise abwickelbar sein kann. Es kann vorgesehen, dass mindestens einer der Fahrwagen eine Aufwickelvorrichtung aufweisen kann, an oder mit der die flexible Zwischenabdeckung befestigt sein kann, so dass die flexible Zwischenabdeckung zumindest teilweise aufwickelbar und/oder zumindest teilweise abwickelbar sein kann. In einigen Ausführungsformen kann mindestens eines der Lastaufnahmemittel eine Spannvorrichtung aufweisen, an oder mit der die flexible Zwischenabdeckung befestigt sein kann, so dass die flexible Zwischenabdeckung spannbar kann. Durch die Aufwickelvorrichtung und/oder Spannvorrichtung kann der den Zwischenraum zwischen den Lastaufnahmemitteln Abschnitt der flexiblen Zwischenabdeckung, und/oder die Tiefe der Mulde, einstellbar und/oder variierbar sein, und/oder eine Spannkraft bei oder nach dem Auseinanderziehen der flexiblen Zwischenabdeckung 8 auf die flexible Zwischenabdeckung 8 wirken. Die Aufwickelvorrichtung und/oder die Spannvorrichtung kann eine Feder, beispielsweise eine Drehfeder, aufweisen. Alternativ oder zusätzlich kann die Aufwickelvorrichtung und/oder die Spannvorrichtung einen Antrieb, beispielsweise einen Elektromotor, haben. Der Antrieb kann ansteuerbar sein.

Mindestens eines der Lastaufnahmemittel kann einen Lastsensor aufweisen, der dazu eingerichtet sein kann, eine auf die flexible Zwischenabdeckung wirkende Kraft, bevorzugt eine auf die flexible Zwischenabdeckung wirkende Gewichtskraft, zu erfassen. Es kann vorgesehen sein, dass mindestens einer der Fahrwagen eine einen Lastsensor aufweisen kann, der dazu eingerichtet sein kann, eine auf die flexible Zwischenabdeckung wirkende Kraft, bevorzugt eine auf die flexible Zwischenabdeckung wirkende Gewichtskraft, zu erfassen. Der Lastsensor kann in der Befestigungsschiene und/oder der Aufwickelvorrichtung angeordnet sein.

Mindestens eines der Lastaufnahmemittel kann eine Neigungsvorrichtung aufweisen, mit der das Lastaufnahmemittel um eine Achse quer zur Transportrichtung verschwenkbar oder neigbar sein kann. Es kann vorgesehen sein, dass mindestens einer der Fahrwagen eine Neigungsvorrichtung aufweisen kann, mit der das Lastaufnahmemittel um eine Achse quer zur Transportrichtung verschwenkbar oder neigbar sein kann.

Mit "Neigung des Lastaufnahmemittels", "geneigtes Lastaufnahmemittel", "neigen des Lastaufnahmemittels" oder dergleichen kann gemeint sein, dass der Aufnahmebereich des Lastaufnahmemittels relativ zu, beispielsweise in Richtung zu oder entgegen, dem Fahrwerk, der Laufschiene, und/oder der Transportrichtung geneigt oder verschwenkt sein oder werden kann. In einigen Ausführungsformen kann damit aber auch alternativ eine Neigung oder Verschwenkung des Aufnahmebereichs zu einer horizontalen Ebene gemeint sein.

Mindestens eines der Lastaufnahmemittel und/oder mindestens einer der Fahrwagen kann alternativ oder zusätzlich eine Neigungsvorrichtung aufweist, mit der das Lastaufnahmemittel um eine Achse parallel zur Transportrichtung verschwenkbar oder neigbar sein kann.

Mindestens eines der Lastaufnahmemittel, bevorzugt ein in Transportrichtung der flexiblen Zwischenabdeckung nachgelagertes Lastaufnahmemittel, kann zumindest zeitweise und/oder abschnittsweise in Transportrichtung geneigt sein, wenn sich das Lastaufnahmemittel in einem Abschnitt vor dem Steigabschnitt befindet. Der Abschnitt kann ein oder der Flachabschnitt sein. Durch das Neigen des Lastaufnahmemittels kann ein von dem Lastaufnahmemittel transportierter Gegenstand auf oder in dem Lastaufnahmemittel verschoben sein oder werden. Das Lastaufnahmemittel kann derart geneigt sein oder werden, dass der Gegenstand in eine vorgegebene Position auf oder in dem Lastaufnahmemittel gebracht sein oder werden kann, beispielsweise zur Mitte zurückgeschoben sein oder werden kann.

Mindestens eines der Lastaufnahmemittel kann im Steigabschnitt zumindest zeitweise und/oder abschnittsweise zu der Steigung geneigt sein. Mindestens eines der Lastaufnahmemittel kann im Steigabschnitt zumindest zeitweise und/oder abschnittsweise in Transportrichtung geneigt sein. Es kann vorgesehen sein, dass das Lastaufnahmemittel um einen Neigungswinkel, der größer als ein Steigungswinkel des Steigabschnitts sein kann, geneigt sein kann. Dadurch kann ein von dem Lastaufnahmemittel transportierter Gegenstand gegen die flexible Zwischenabdeckung geschoben sein oder werden. Damit kann ein besonders sicherer Transport des Gegenstands in dem Steigabschnitt ermöglicht sein.

Mindestens eines der Lastaufnahmemittel kann im Gefälleabschnitt zumindest zeitweise und/oder abschnittsweise entgegen dem Gefälle geneigt sein. Mindestens eines der Lastaufnahmemittel kann im Gefälleabschnitt zumindest zeitweise und/oder abschnittsweise entgegen der Transportrichtung geneigt sein. Das Lastaufnahmemittel kann ein der flexiblen Zwischenabdeckung in Transportrichtung vorgelagertes Lastaufnahmemittel sein. Es kann vorgesehen sein, dass das Lastaufnahmemittel um einen Neigungswinkel, der größer als ein Gefällewinkel des Gefälleabschnitt sein kann, geneigt sein kann. Dadurch kann ein von dem Lastaufnahmemittel transportierter Gegenstand gegen die flexible Zwischenabdeckung geschoben sein oder werden. Damit kann ein besonders sicherer Transport des Gegenstands in dem Gefälleabschnitt ermöglicht sein.

Mit "zeitweise oder abschnittsweise geneigt" kann gemeint sein, dass das Lastaufnahmemittel und/oder der Aufnahmebereich bei Beginn eines bestimmten Zeitintervall und/oder eines bestimmten Bereich entlang der Laufschiene um einen Neigungswinkel geneigt und/oder verschwenkt ist oder wird, und außerhalb des Zeitintervalls und/oder des bestimmten Bereichs um denselben Neigungswinkel in entgegengesetzter Richtung zurückgeneigt und/oder zurück verschwenkt ist oder wird. Mit "zeitweise oder abschnittsweise geneigt" kann gemeint sein, dass das Lastaufnahmemittel und/oder der Aufnahmebereich in einem bestimmten Zeitintervall und/oder in einem bestimmten Bereich entlang der Laufschiene um einen ersten Neigungswinkel geneigt und/oder verschwenkt ist oder wird, und außerhalb des Zeitintervalls und/oder des bestimmten Bereichs um einen zweiten Neigungswinkel, der von dem ersten Neigungswinkel verschieden sein kann, geneigt und/oder verschwenkt ist oder wird.

Der Steigsorter kann eine Erfassungseinheit aufweisen, die dazu eingerichtet sein kann, einen von einem Lastaufnahmemittel transportierten Gegenstand zu erfassen. Es kann vorgesehen sein, dass die Erfassungseinheit eine Position des Gegenstands, beispielsweise auf oder in dem Lastaufnahmemittel, in der Mulde und/oder über die flexible Zwischenabdeckung überstehend erfassen kann Die Erfassungseinheit kann eine Kamera, z.B. eine optische Kamera, sein oder aufweisen. Die Kamera kann geeignet angeordnet sein.

Das Lastaufnahmemittel kann dazu eingerichtet sein, sich in Abhängigkeit der von der Erfassungseinheit erfassten Informationen, bevorzugt einer erfassten Position des Gegenstands, zu neigen. Damit kann der Gegenstand an eine bestimmte Position geführt sein oder werden, beispielsweise zur Mitte des Lastaufnahmemittel zurückgeschoben sein oder werden. Der Steigesorter kann eine entsprechende Steuereinheit aufweisen.

Ein weiterer Aspekt der Erfindung betrifft ein Verfahren zum Transportieren von Gegenständen mit einem Steigsorter, wobei das Verfahren die Schritte umfasst:
- Bereitstellen eines Gegenstands auf einem Lastaufnahmemittel und/oder zumindest teilweise in einer Mulde einer flexiblen Zwischenabdeckung, die zwischen dem Lastaufnahmemittel und einem weiteren Lastaufnahmemittel, das dem Lastaufnahmemittel in Transportrichtung vorgelagert ist, angeordnet ist;
- Verfahren des weiteren Lastaufnahmemittels in einen Steigabschnitt des Steigsorters, wobei beim Verfahren des weiteren Lastaufnahmemittels in dem Steigabschnitt die flexible Zwischenabdeckung auseinandergezogen wird;
- Schieben des Gegenstands entgegen der Transportrichtung auf das und/oder zu dem Lastaufnahmemittel, wenn der Gegenstand zumindest teilweise von dem Lastaufnahmemittel über die Mulde übersteht und/oder zumindest teilweise in der Mulde bereitgestellt ist.

Das Verfahren wird mit einem erfindungsgemäßen Steigsorter durchgeführt. Ein erfindungsgemäßer Steigsorter kann dazu eingerichtet sein, einen, mehrere oder alle Schritte des Verfahrens durchzuführen.

Beim Verfahren des Lastaufnahmemittels in dem Steigabschnitt kann das Lastaufnahmemittel zumindest zeitweise und/oder abschnittsweise zu der Steigung und/oder in Transportrichtung geneigt werden. Das Lastaufnahmemittel kann um einen Neigungswinkel, der größer als ein Steigungswinkel des Steigabschnitts sein kann, geneigt werden. Das Lastaufnahmemittel kann insbesondere ein Lastaufnahmemittel sein, das einen oder den Gegenstand zumindest teilweise oder vollständig stützt, aufnimmt und/oder transportiert.

Die flexible Zwischenabdeckung kann beim Verfahren des weiteren Lastaufnahmemittels und/oder des Lastaufnahmemittels in einem Gefälleabschnitt des Steigsorters auseinandergezogen werden.

Das Lastaufnahmemittel kann in einem oder dem Gefälleabschnitt des Steigsorters zumindest zeitweise und/oder abschnittsweise entgegen dem Gefälle und/oder entgegen der Transportrichtung geneigt werden. Das Lastaufnahmemittel kann um einen Neigungswinkel, der größer als ein Gefällewinkel des Gefälleabschnitts sein kann, geneigt werden.

Die flexible Zwischenabdeckung kann durch eine Aufwickelvorrichtung und/oder Spannvorrichtung des Lastaufnahmemittels und/oder des weiteren Lastaufnahmemittels aufgewickelt und/oder gespannt werden.

Die Erfindung wird anhand der nachfolgenden beispielhaften Figuren weiter erläutert. Es zeigen:
- Fig. 1: eine Ausführungsform eines erfindungsgemäßen Steigesorters, in einem Flachabschnitt;
- Fig. 2: die in Figur 1 gezeigte Ausführungsform eines erfindungsgemäßen Steigesorters, in einem Steigabschnitt;
- Fig. 3: eine weitere beispielhafte Ausführungsform eines erfindungsgemäßen Steigesorters, in einem Steigabschnitt;
- Fig. 4: eine beispielhafte Ansicht zweier Lastmittelaufnamen mit einem flexiblen Bereich;
- Fig. 5: eine weitere beispielhafte Ausführungsform eines erfindungsgemäßen Steigesorters, in einem Flachabschnitt und einem Steigabschnitt; und
- Fig. 6: eine weitere beispielhafte Ausführungsform eines erfindungsgemäßen Steigesorters, in einem Gefälleabschnitt und einem Flachabschnitt.

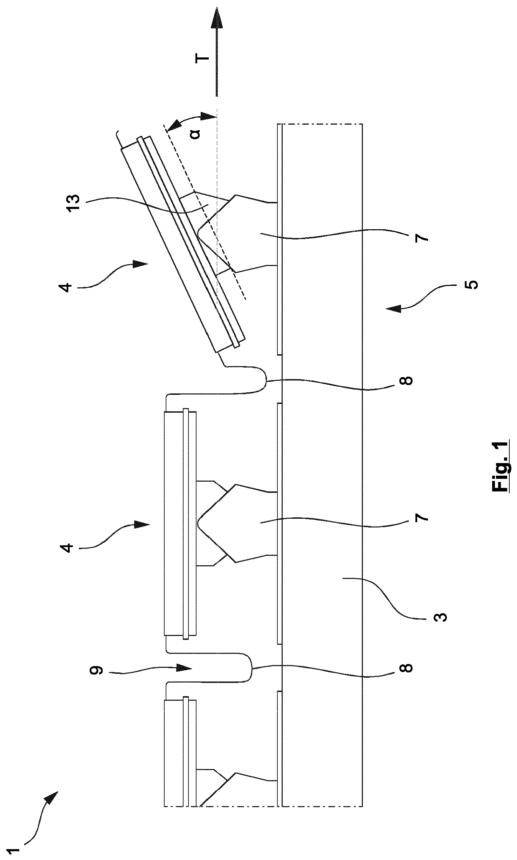

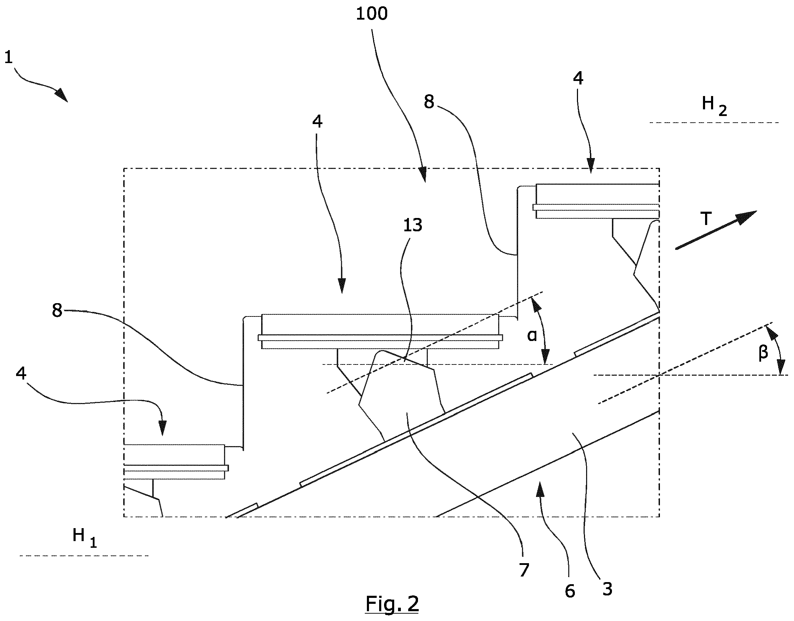

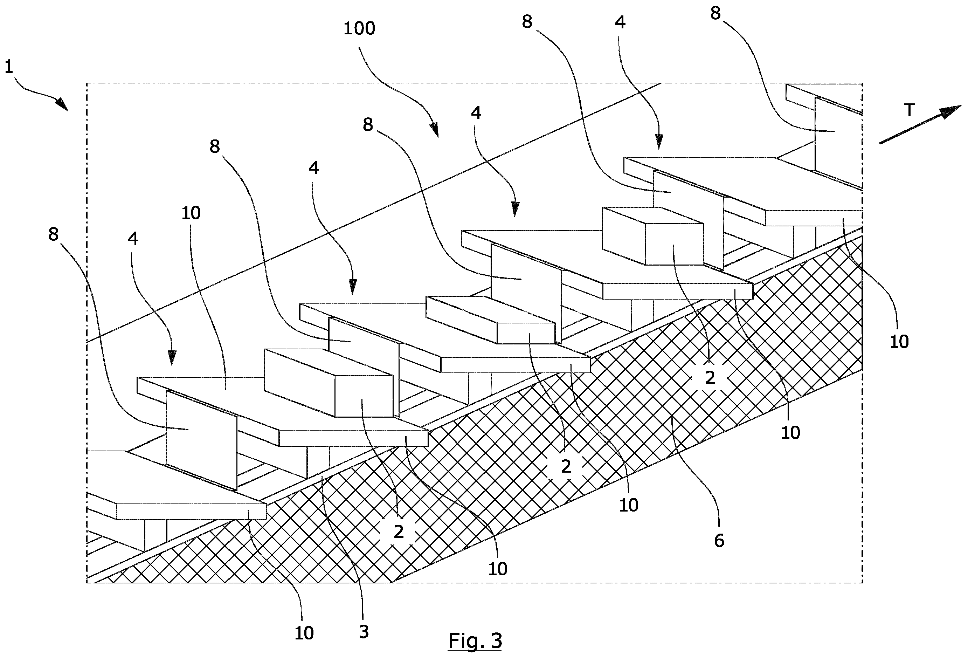

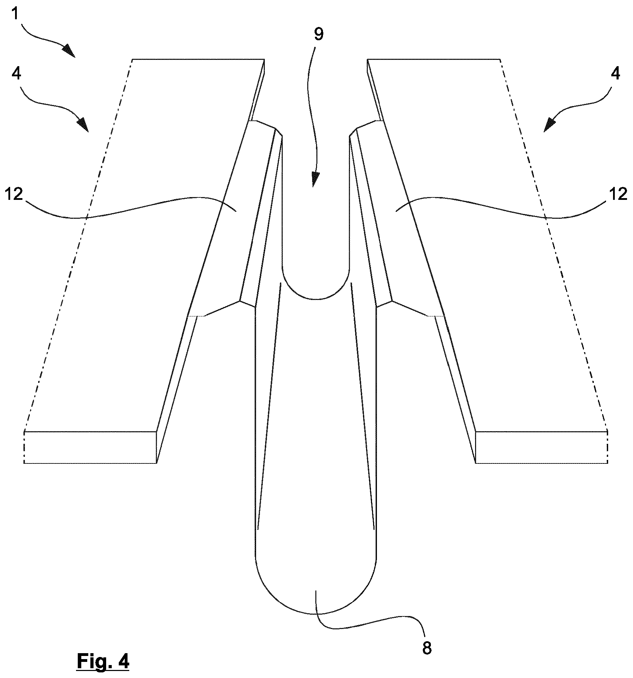

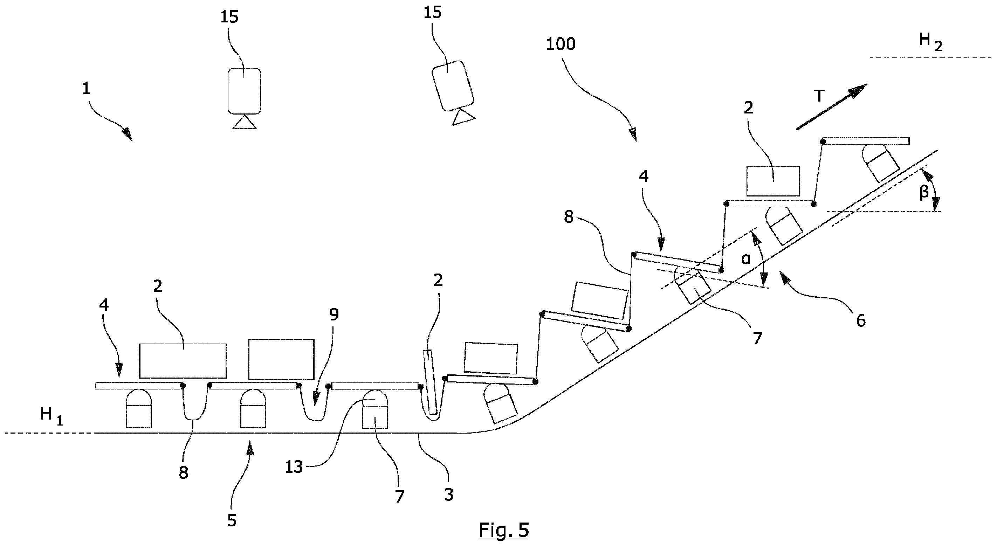

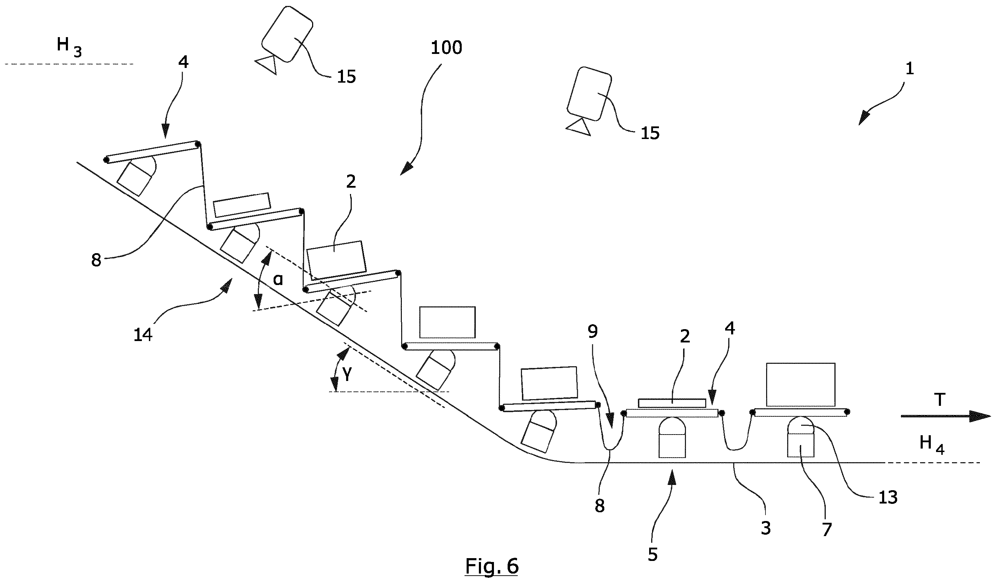

Figuren 1 bis 6 zeigen beispielhafte Ausführungsformen erfindungsgemäßer Steigesorter 1. Figur 1 zeigt einen Flachabschnitt 5 eines erfindungsgemäßen Steigesorters 1. Figur 2 zeigt einen Steigabschnitt 6 eines erfindungsgemäßen Steigesorters 1. Figur 3 zeigt einen Steigabschnitt 6 eines weiteren erfindungsgemäßen Steigesorters 1. Figur 4 zeigt zwei Lastaufnahmemittel 4 mit einer flexiblen Zwischenabdeckung 8. Figur 5 zeigt einen Flachabschnitt 5 und einen Steigabschnitt 6 einer Ausführungsform eines erfindungsgemäßen Steigesorters 1. Figur 6 zeigt einen Gefälleabschnitt **14** und einen Flachabschnitt 5 eines erfindungsgemäßen Steigesorters 1.

Der Steigesorter 1 weist eine Laufschiene 3 und mindestens zwei oder mehr Lastaufnahmemittel 4 auf. Die Lastaufnahmemittel 4 sind oder werden entlang der Laufschiene 3 in Transportrichtung T verfahren. Die Lastaufnahmemittel 4 können Gegenstände 2 transportieren. Ein Gegenstand 2 kann beispielsweise ein Paket, ein Päckchen, eine Postsendung, ein Sack, eine Verpackung, eine Kartonage, ein Beutel und/oder eine Tasche sein oder aufweisen. Der Gegenstand 2 kann auf dem Lastaufnahmemittel 4 liegen, und/oder von einer Oberfläche des Lastaufnahmemittel 4 gestützt oder gehalten sein.

Das Lastaufnahmemittel 4 kann einen Fahrwagen 7 aufweisen. Der Fahrwagen 7 kann in der Laufschiene 3 aufgenommen sein. Die Laufschiene 3 kann den Fahrwagen 7 führen.

Eines, mehrere oder alle der Lastaufnahmemittel 4 und/oder Fahrwagen 7 können mit einer Förderkette verbunden sein, so dass das oder die Lastaufnahmemittel 4 entsprechend von der Förderkette bewegt werden können. Die Förderkette kann beispielsweise in der Laufschiene 3 angeordnet oder aufgenommen sein.

Das Lastaufnahmemittel 4 kann einen Aufnahmebereich aufweisen, der einen Gegenstand 2 stützen, halten oder aufnehmen kann. Der Aufnahmebereich kann ein Gurtförderer 10 oder eine Kippschale sein oder aufweisen.

In einigen Ausführungsformen kann mindestens eines der Lastaufnahmemittel 4 einen Gurtförderer 10 umfassen. Der Gurtförderer 10 kann quer zur Transportrichtung T, und/oder zur Laufschiene 3, angeordnet und/oder ausgerichtet sein. Der Gegenstand 2 kann auf dem Gurtförderer 10 aufliegen. Bei Betätigung des Förderers 10 kann ein von dem Gurtförderer 10 und/oder dem Lastaufnahmemittel 4 transportierter Gegenstand 2 abgeladen sein oder werden, und/oder von oder aus dem Lastaufnahmemittel 4 entfernt sein oder werden. In einigen Ausführungsformen kann der Steigesorter 1 ein Quergurtsorter sein oder aufweisen.

Alternativ oder zusätzlich kann mindestens eines der Lastaufnahmemittel 4 eine (nicht in den Figuren gezeigte) Kippschale umfassen. Der Gegenstand 2 kann in der Kippschale angeordnet sein und/oder liegen. Durch Verkippung der Kippschale kann ein von der Kippschale und/oder dem Lastaufnahmemittel 4 transportierter Gegenstand 2 abgeladen sein oder werden, und/oder von oder aus dem Lastaufnahmemittel 4 oder der Kippschale entfernt sein oder werden. In einigen Ausführungsformen kann der Steigesorter 1 ein Kippschalensorter sein oder aufweisen.

In einigen Ausführungsformen kann das Lastaufnahmemittel 4 und/oder der Aufnahmebereich mehr als einen Gurtförderer 10 und/oder mehr als eine Kippschale aufweisen. Ein Lastaufnahmemittel 4 kann z.B. einem in der EP 3 159 288 B1 offenbarten Lastaufnahmemittel entsprechen und/oder aufweisen, das zwei oder mehr Lastaufnahmeelemente, z.B. zwei oder mehr Gurtförderer 10, Gurte, Kippschalen oder dergleichen, oder Kombination dieser, haben kann. Das Lastaufnahmemittel 4 kann z.B. ein Lastaufnahmemittel eines double crossbelt sorters sein, d.h. beispielsweise zwei Gurtförderer 10 umfassen, die den Aufnahmebereich bilden und/oder Gegenstände transportieren bzw. stützen oder aufnehmen können.

Ein in Transportrichtung T einer flexiblen Zwischenabdeckung 8 vorgelagertes Lastaufnahmemittel 4 kann ein weiteres Lastaufnahmemittel 4 sein und/oder als solches bezeichnet sein oder werden.

Der Steigesorter 1 kann einen Flachabschnitt 5 aufweisen. In dem Flachabschnitt 5 kann die Laufschiene 3 im Wesentlichen horizontal und/oder flach verlaufen. In einigen Ausführungsformen kann vorgesehen sein, dass die Lastaufnahmemittel 4 in dem Flachabschnitt 5 im Wesentlichen auf gleicher Höhe geführt und/oder verfahren sind oder werden. In einigen Ausführungsformen kann in dem Flachabschnitt 5 ein Steigungswinkel β der Laufschiene 3 klein sein, und/oder ungefähr 0° sein. Der Steigungswinkel β kann in einigen Ausführungsformen zur Horizontalen gemessen oder definiert sein.

Der Steigesorter 1 weist einen Steigabschnitt 6 auf. In dem Steigabschnitt 6 kann die Laufschiene 3 im Wesentlichen geneigt oder unter einer Steigung verlaufen. Beispielsweise kann die Laufschiene 3 unter einem Steigungswinkel β zur horizontalen verlaufen und/oder angeordnet sein. In dem Steigabschnitt 6 kann die Laufschiene 3 in Transportrichtung T von einer ersten Höhe H1 auf eine zweite Höhe H2, die über der ersten Höhe H1 liegen kann, geführt sein. In einigen Ausführungsformen kann in dem Steigabschnitt 6 ein Steigungswinkel β der Laufschiene 3 größer als in dem Flachabschnitt sein. Der Steigungswinkel β kann in einigen Ausführungsformen in dem Steigabschnitt 6 kleiner als 60°, kleiner als 45°, kleiner als 30° und/oder kleiner als 15° sein. In einigen Ausführungsformen kann der Steigungswinkel β in dem Steigabschnitt 6 aber auch größer oder kleiner sein. Der Steigungswinkel β kann in einigen Ausführungsformen zur Horizontalen gemessen oder definiert sein.

Der Steigesorter 1 kann einen Gefälleabschnitt 14 aufweisen. In dem Gefälleabschnitt 14 kann die Laufschiene 3 im Wesentlichen geneigt oder unter einer Steigung verlaufen. Beispielsweise kann die Gefälleabschnitt 14 unter einem Gefällewinkel γ zur horizontalen verlaufen und/oder angeordnet sein. In dem Gefälleabschnitt 14 kann die Laufschiene 3 in Transportrichtung T von einer dritten Höhe H3 auf eine vierte Höhe H4, die unter der dritten Höhe H3 liegen kann, geführt sein. In einigen Ausführungsformen kann in dem Gefälleabschnitt 14 ein Gefällewinkel γ der Laufschiene 3 größer als in dem Flachabschnitt sein. Der Gefällewinkel γ kann in einigen Ausführungsformen in dem Gefälleabschnitt 14 kleiner als 60°, kleiner als 45°, kleiner als 30° und/oder kleiner als 15° sein. In einigen Ausführungsformen kann der Gefällewinkel γ in dem Gefälleabschnitt 14 aber auch größer oder kleiner sein. Der Gefällewinkel γ kann in einigen Ausführungsformen zur Horizontalen gemessen oder definiert sein.

Zwischen zwei aufeinanderfolgenden Lastaufnahmemitteln 4 ist eine flexible Zwischenabdeckung 8 angeordnet. Die flexible Zwischenabdeckung 8 ist an den jeweiligen Lastaufnahmemitteln 4 befestigt. In einigen Ausführungsformen kann die flexible Zwischenabdeckung 8 an, bei oder mit einander zugewandten Rändern der jeweiligen Lastaufnahmemitteln 4 angeordnet und/oder befestigt sein. In einigen Ausführungsformen kann vorgesehen sein, dass zwischen einer Mehrzahl aufeinanderfolgenden Lastaufnahmemitteln 4 jeweils eine flexible Zwischenabdeckung 8 angeordnet sein kann. In einigen Ausführungsformen kann vorgesehen sein, dass zwischen allen aufeinanderfolgenden Lastaufnahmemitteln 4 jeweils eine flexible Zwischenabdeckung 8 angeordnet sein kann.

Die flexible Zwischenabdeckung 8 kann einen Zwischenraum zwischen zwei Lastaufnahmemitteln 4 abdecken und/oder überdecken. Es kann vorgesehen sein, dass der Zwischenraum von der flexiblen Zwischenabdeckung vollständig abgedeckt sein kann. Die flexible Zwischenabdeckung 8 kann insbesondere die Laufschiene 3 zumindest teilweise oder vollständig abdecken und/oder überdecken. Die flexible Zwischenabdeckung 8 kann verhindern, dass ein von einem Lastaufnahmemittel 4 transportierter Gegenstand 2 zwischen zwei Lastaufnahmemitteln 4 fallen und/oder rutschen kann. Die flexible Zwischenabdeckung 8 kann ein Verklemmen eines Gegenstands 2 zwischen zwei Lastaufnahmemitteln 4 verhindern. Die flexible Zwischenabdeckung 8 und/oder die Lastaufnahmemittel 4 können derart eingerichtet und/oder verfahren sein oder werden, dass die flexible Zwischenabdeckung 8 den Zwischenraum stets abdecken kann.

Befindet sich die flexible Zwischenabdeckung 8 und/oder eines oder beide der mit der flexiblen Zwischenabdeckung 8 verbundenen Lastaufnahmemittel 4 in dem Steigabschnitt 6 und/oder dem Gefälleabschnitt 14, so können die flexible Zwischenabdeckung 8 und die jeweiligen Lastaufnahmemittel 4 eine Treppenstruktur 100 und/oder zumindest einen Teil einer Treppenstruktur 100, bilden, vgl. z.B. die Figuren 2, 3, 5 oder 6. Die flexible Zwischenabdeckung 8 kann eine Setzstufe der Treppenstruktur 100 bilden. Die Lastaufnahmemittel 4 können Stufen der Treppenstruktur 100 bilden. Die Setzstufe kann zwischen zwei Stufen angeordnet sein, und/oder mit diesen verbunden sein. Die Setzstufe kann im Wesentlichen vertikal, und/oder unter einem Winkel zur Vertikalen verlaufen und/oder angeordnet sein. Ist die flexible Zwischenabdeckung 8 auseinandergezogen, so kann die flexible Zwischenabdeckung 8 eine Setzstufe der Treppenstruktur 100 bilden. Eine, mehrere oder alle Stufen können im Wesentlichen horizontal und/oder unter einem Winkel zur Horizontalen verlaufen und/oder angeordnet sei. Ein Lastaufnahmemittel 4 kann auch dann eine Stufe bilden, wenn es unter einem Winkel geneigt ist und/oder wird.

Die Treppenstruktur 100 kann eine oder mehrere Stufen aufweisen. Die Treppenstruktur 100 kann eine oder mehrere Setzstufen aufweisen. Es kann vorgesehen sein, dass nur dann eine Treppenstruktur 100 gebildet sein oder werden kann, wenn sich mindestens ein Lastaufnahmemittel in einem Gefälleabschnitt 14 oder Steigabschnitt 6 des Steigesorters 1 befinden und/oder angeordnet sein kann. Es kann vorgesehen sein, dass nur dann eine Treppenstruktur 100 in einem Steigabschnitt 6 gebildet sein oder werden kann, wenn sich mindestens ein Lastaufnahmemittel 4 in dem Steigabschnitt 6 befindet und/oder angeordnet ist. Es kann vorgesehen sein, dass nur dann eine Treppenstruktur 100 in einem Gefälleabschnitt 14 gebildet sein oder werden kann, wenn sich mindestens ein Lastaufnahmemittel 4 in dem Gefälleabschnitt 14 befindet und/oder angeordnet ist.

Ist die flexible Zwischenabdeckung 8 in dem Flachabschnitt 5, so kann die flexible Zwischenabdeckung 8 durchhängen und/oder eine Mulde 9 bilden, vergleiche z.B. Figuren 1, 4, 5 oder 6. Damit kann die flexible Zwischenabdeckung 8 in dem Flachabschnitt 5 einen Gegenstand 2 zumindest teilweise oder vollständig aufnehmen. In einigen Ausführungsformen kann die flexible Zwischenabdeckung 8 derart dimensioniert sein, dass es in dem Flachabschnitt 5 die Laufschiene 3 nicht kontaktiert, bzw. nicht weit genug durchhängt, um die Laufschiene 3 zu kontaktieren.

Befindet sich die flexible Zwischenabdeckung 8 in dem Steigabschnitt 6 oder dem Gefälleabschnitt 14, so kann die flexible Zwischenabdeckung 8 auseinandergezogen und/oder gestreckt sein oder werden, vgl. z.B. Figuren 2, 3, 5 oder 6. Die flexible Zwischenabdeckung 8 kann beim Übergang eines Lastaufnahmemittel 4 von einem Flachabschnitt 5 zu einem Steigabschnitt 6 gestreckt sein oder werden.

Befindet sich ein Gegenstand 2 zumindest teilweise in der flexiblen Zwischenabdeckung 8 und/oder der Mulde 9, wenn die flexible Zwischenabdeckung 8 in dem Flachabschnitt 5 ist, so kann durch das Auseinanderziehen und/oder Strecken der flexiblen Zwischenabdeckung 8 in dem Gefälleabschnitt 6, und/oder beim Übergang in dem Gefälleabschnitt 6, der Gegenstand 2 auf das der flexiblen Zwischenabdeckung in Transportrichtung T nachgelagerte Lastaufnahmemittel 4 zurückgeschoben werden.

Überdeckt ein Gegenstand 2 die flexible Zwischenabdeckung 8 und/oder die Mulde 9, wenn die flexible Zwischenabdeckung 8 in dem Flachabschnitt 5 ist, so kann durch das Auseinanderziehen und/oder Strecken der flexiblen Zwischenabdeckung 8 in dem Gefälleabschnitt 6, und/oder beim Übergang in dem Gefälleabschnitt 6, der Gegenstand 2 auf das der flexiblen Zwischenabdeckung in Transportrichtung T nachgelagerte Lastaufnahmemittel 4 zurückgeschoben werden.

Die flexible Zwischenabdeckung 8 kann ein Tuch 11 sein oder aufweisen. Die flexible Zwischenabdeckung 8 und/oder das Tuch 11 kann ein Gewebe, ein Gestrick, ein Gewirk und/oder ein Vlies sein. Die flexible Zwischenabdeckung 8 und/oder das Tuch kann Naturfasern und/oder Kunststofffasern aufweisen und/oder aus solchen bestehen. Die flexible Zwischenabdeckung 8 kann verformbar, biegsam und/oder elastisch sein. Die flexible Zwischenabdeckung 8 kann formveränderbar sein.

Die flexible Zwischenabdeckung 8 kann quer zur Transportrichtung T, derart dimensioniert oder bemessen sein, dass sich die flexible Zwischenabdeckung 8 über die Laufschiene 3 quer zur Transportrichtung T erstrecken kann. In einigen Ausführungsformen kann die flexible Zwischenabdeckung 8 die Laufschiene 3 nicht vollständig quer zur Transportrichtung T überdecken. Alternativ kann vorgesehen sein, dass die flexible Zwischenabdeckung 8 über Laufschiene 3 quer zur Transportrichtung T übersteht.

Die flexible Zwischenabdeckung 8 kann in einigen Ausführungsformen mittels einer Befestigungsschiene 12 an dem Lastaufnahmemittel 4 befestigt sein. In einigen Ausführungsformen kann die Befestigungsschiene 12 seitlich an dem Lastaufnahmemittel 4 und/oder dem Fahrwagen 7 angeordnet und/oder befestigt sein. Die flexible Zwischenabdeckung 8 und/oder die Befestigungsschiene 12 kann lösbar an dem Lastaufnahmemittel 4 und/oder dem Fahrwagen 7 befestigt sein. Damit kann die flexible Zwischenabdeckung 8 einfach, schnell und unkompliziert ausgetauscht sein oder werden. In einigen Ausführungsformen kann die flexible Zwischenabdeckung 8 an der Befestigungsschiene 12 befestigt sein, beispielsweise verschraubt oder eingeklemmt, und die Befestigungsschiene 12 an dem Lastaufnahmemittel 4 und/oder dem Fahrwagen 7 montiert, beispielsweise verschraubt oder verrastet, sein

In einigen Ausführungsformen kann ein oder das Lastaufnahmemittel 4 und/oder ein Fahrwagen 7 eine (nicht in den Figuren gezeigte) Aufwickelvorrichtung und/oder Spannvorrichtung aufweisen. Die flexible Zwischenabdeckung 8 kann an oder mit der Aufwickelvorrichtung und/oder Spannvorrichtung verbunden und/oder befestigt sein. Die Aufwickelvorrichtung kann dazu eingerichtet sein, die flexible Zwischenabdeckung 8 aufzuwickeln und/oder abzuwickeln, und oder die flexible Zwischenabdeckung 8 kann aufwickelbar und/oder abwickelbar sein. Die Spannvorrichtung kann dazu eingerichtet sein, die flexible Zwischenabdeckung 8 zu spannen. Die flexible Zwischenabdeckung 8 kann spannbar sein. In einigen Ausführungsformen kann die Aufwickelvorrichtung derart eingerichtet sein und/oder die flexible Zwischenabdeckung 8 derart aufgewickelt und/oder abgewickelt sein, dass ein vorgegebener Teil und/oder Abschnitt der flexiblen Zwischenabdeckung 8 zwischen zwei Lastaufnahmemitteln 4 im Flachabschnitt 5 durchhängt. In einigen Ausführungsformen kann die Aufwickelvorrichtung dazu eingerichtet sein, dass der den Zwischenbereich zwischen den beiden Lastaufnahmemitteln 4 abdeckende Teil und/oder Abschnitt der flexiblen Zwischenabdeckung 8 variabel sein kann, beispielsweise zwischen einem Minimalwert und einem Maximalwert variieren kann. In einigen Ausführungsformen kann vorgesehen sein, dass durch das Aufwickeln und/oder Abwickeln die flexible Zwischenabdeckung 8 gestreckt und/oder entspannt wird, und oder die Streckung oder Spannung der flexiblen Zwischenabdeckung 8 eingestellt und/oder variiert sein oder werden kann. In einigen Ausführungsformen kann die Aufwickelvorrichtung eine Feder, beispielsweise eine Triebfeder und/oder Drehfeder aufweisen, die eine Rückstellkraft ausüben kann, z.B. wenn die flexible Zwischenabdeckung 8 mehr als vorgegeben abgewickelt ist. In einigen Ausführungsformen kann die Spannvorrichtung eine Feder, beispielsweise eine Triebfeder und/oder Drehfeder aufweisen, die eine Spannkraft ausüben kann. In einigen anderen Ausführungsformen kann alternativ oder zusätzlich die Aufwickelvorrichtung und/oder die Spannvorrichtung einen Antrieb, beispielsweise einen Elektromotor oder dergleichen, aufweisen, der die flexible Zwischenabdeckung 8 aufwickeln und/oder abwickeln, und/oder spannen, kann. Der Antrieb kann ansteuerbar sein.

In einigen Ausführungsformen kann ein oder das Lastaufnahmemittel 4 und/oder Fahrwagen 7 einen (nicht in den Figuren gezeigten) Lastsensor aufweisen. Der Lastsensor kann dazu eingerichtet sein, eine auf ein mit dem Lastaufnahmemittel 4 und/oder dem Fahrwagen 7 verbundenen flexiblen Zwischenabdeckung 8 wirkende Kraft zu erfassen. Beispielsweise kann der Lastsensor dazu eingerichtet sein, eine Kraft, beispielsweise eine Gewichtskraft, zu erfassen, wenn ein Gegenstand 2 in der Mulde 9 zumindest teilweise aufgenommen ist. Der Lastsensor kann beispielsweise in einigen Ausführungsformen in der Befestigungsschiene 12 und/oder der Aufwickelvorrichtung angeordnet sein.

Das Lastaufnahmemittel 4 und/oder der Fahrwagen 7 kann eine Neigungsvorrichtung 13 aufweisen. Die Neigungsvorrichtung 13 kann dazu eingerichtet sein, dass Lastaufnahmemittel 4, insbesondere einen Aufnahmebereich für ein Gegenstand 2 des Lastaufnahmemittel 4, beispielsweise einen Gurtförderer, eine Kippschale, eine Auflagefläche, oder dergleichen, zu verschwenken und/oder zu neigen, beispielsweise um einen Neigungswinkel α. Das Lastaufnahmemittel 4 kann durch die Neigungsvorrichtung 13 in Transportrichtung T und/oder oder entgegen Transportrichtung T geneigt sein oder werden. Alternativ oder zusätzlich kann die Neigungsvorrichtung 13 dazu eingerichtet sein, dass Lastaufnahmemittel 4, insbesondere einen Aufnahmebereich für ein Gegenstand 2 des Lastaufnahmemittel 4, beispielsweise einen Gurtförderer, eine Kippschale, eine Auflagefläche, oder dergleichen, quer zur Transportrichtung T zu neigen und/oder zu verschwenken.

Die Neigungsvorrichtung 13 kann eine Schwenkachse aufweisen. Die Neigungsvorrichtung 13 kann eine Nut oder eine Schwenkführung und einen Anschlag aufweisen, die einen maximalen Neigungswinkel definieren können. Die Neigungsvorrichtung 13 kann ein Kopfteil haben, das an oder bei dem Aufnahmebereich angeordnet und/oder mit diesem verbunden sein kann. Die Neigungsvorrichtung 13 kann ein Basiselement haben, das an oder bei dem Fahrwagen 7 angeordnet und/oder mit diesem verbunden sein kann. Das Basisteil kann die Nut oder Schwenkführung aufweisen. Das Kopfteil kann den Anschlag aufweisen. Das Kopfteil kann mit relativ zum Basisteil geneigt sein oder werden. Das Kopfteil kann von dem Basisteil neigbar gelagert sein, und/oder neigbar mit diesem verbunden sein.

Es kann vorgesehen sein, dass das Lastaufnahmemittel 4 in dem Steigabschnitt 6 um einen Neigungswinkel α geneigt ist oder wird. Durch das Neigen des Lastaufnahmemittel 4 kann der Aufnahmebereich für den Gegenstand 2, insbesondere der Gurtförderer, Kippschale, Auflagefläche, oder dergleichen, im Steigabschnitt 6 im Wesentlichen horizontal ausgerichtet sein, und/oder zumindest derart geneigt sein, dass ein von dem Lastaufnahmemittel 4 transportierter Gegenstand 2 nicht entgegen der Transportrichtung T von dem Lastaufnahmemittel 4 rutscht oder fällt. In einigen Ausführungsformen kann der Neigungswinkel α im Wesentlichen dem Steigungswinkel β des Steigabschnitt 6 entsprechen, zumindest betragsmäßig. Durch das Neigen der Lastaufnahmemittel 4 im Steigabschnitt 6 kann die flexible Zwischenabdeckung 8 auseinandergezogen und/oder gestreckt sein oder werden. In einigen Ausführungsformen können die Lastaufnahmemittel 4 derart voneinander beabstandet und/oder geneigt sein, dass im Steigabschnitt 6 die flexible Zwischenabdeckung 8 im Wesentlichen vertikal ausgerichtet sein kann, und/oder gespannt sein kann.

Weist der Steigsorter 1 einen Gefälleabschnitt 14 auf, so kann vorgesehen sein, dass das Lastaufnahmemittel 4 in dem Gefälleabschnitt 14 um einen Neigungswinkel α geneigt ist oder wird. Durch das Neigen des Lastaufnahmemittel 4 kann der Aufnahmebereich für den Gegenstand 2, insbesondere der Gurtförderer, Kippschale, Auflagefläche, oder dergleichen, im Steigabschnitt 6 im Wesentlichen horizontal ausgerichtet sein, und/oder zumindest derart geneigt sein, dass ein von dem Lastaufnahmemittel 4 transportierter Gegenstand 2 nicht entgegen der Transportrichtung T von dem Lastaufnahmemittel 4 rutscht oder fällt. In einigen Ausführungsformen kann der Neigungswinkel α im Wesentlichen einem Gefällewinkel γ des Gefälleabschnitts 14 entsprechen, zumindest betragsmäßig. Durch das Neigen der Lastaufnahmemittel 4 im Gefälleabschnitt 14 kann die flexible Zwischenabdeckung 8 auseinandergezogen und/oder gestreckt sein oder werden. In einigen Ausführungsformen können die Lastaufnahmemittel 4 derart voneinander beabstandet und/oder geneigt sein, dass im Steigabschnitt 6 die flexible Zwischenabdeckung 8 im Wesentlichen vertikal ausgerichtet sein kann, und/oder gespannt sein kann.

Es kann vorgesehen sein, dass ein oder das Lastaufnahmemittel 4 auch im Flachabschnitt 5 unter einem Neigungswinkel α geneigt sein oder werden kann. Durchneigen des Lastaufnahmemittel 4 in dem Flachabschnitt 5 kann beispielsweise ein Gegenstand 2 in Richtung der Mitte Lastaufnahmemittel 4, beispielsweise dessen Aufnahmebereich, zurückgeführt sein oder werden. In einigen Ausführungsformen kann beispielsweise ein Lastsensor vorgesehen sein, und bei einer durch den Lastsensor erfassten, auf die flexible Zwischenabdeckung 8 wirkenden Gewichtskraft eines Gegenstands 2 eines oder beide der entsprechenden Lastaufnahmemittel 4 geneigt sein oder werden.

Alternativ oder zusätzlich kann vorgesehen sein, dass eines oder das Lastaufnahmemittel 4 in einem Abschnitt vor einem Steigabschnitt 6, beispielsweise in einem Flachabschnitt 5 vor einem Steigabschnitt 6, derart geneigt ist oder wird, dass ein von dem Lastaufnahmemittel 4 transportierter Gegenstand 2 aufgrund dessen Gewichtskraft in Transportrichtung T geführt und/oder geschoben sein oder werden kann. Damit kann sichergestellt sein oder werden, dass der Gegenstand 2 nicht in den dem Lastaufnahmemittel 4 in Transportrichtung T nachgelagerten flexiblen Bereich 8 und/oder Mulde 9 fällt, oder sogar auf das dem Lastaufnahmemittel 4 in Transportrichtung T nachgelagerte Lastauflagemittel 4 rutscht. Es kann vorgesehen sein, die Neigung des entsprechenden Lastaufnahmemittel 4 derart einzustellen und/oder zu variieren, dass der Gegenstand 2 zwar in Richtung der dem Lastaufnahmemittel 4 vorgelagerten flexiblen Zwischenabdeckung 8 geführt und/oder geschoben ist oder wird, aber nicht in die Mulde 9 fällt. Damit kann sichergestellt sein oder werden, dass der Gegenstand 2 im Steigabschnitt 6 unterer auseinanderziehen und/oder Strecken der flexiblen Zwischenabdeckung 8 sicher auf dem Lastaufnahmemittel 4 positioniert oder gelagert ist der wird. Das Lastaufnahmemittel 4 kann in dem Flachabschnitt 5 zumindest abschnittsweise, und/oder zumindest zeitweise geneigt sein oder werden.

In einigen Ausführungsformen kann vorgesehen sein, dass im Steigabschnitt 6 eines, mehrere oder alle der Lastaufnahmemittel 4 um einen Neigungswinkel α geneigt sein oder werden können, der betragsmäßig größer als der Steigungswinkel β des Steigabschnitt 6 sein kann. Im Steigabschnitt 6 kann eines, mehrere oder alle Lastaufnahmemittel in Transportrichtung T geneigt sein oder werden. Im Steigabschnitt 6 kann eines, mehrere oder alle Lastaufnahmemittel in Richtung der Steigung geneigt sein oder werden. Ist ein Lastaufnahmemittel 4 im Steigabschnitt 6 um einen Neigungswinkel α geneigt, der betragsmäßig größer als der Steigungswinkel β ist, so kann ein von dem Lastaufnahmemittel 4 transportierter Gegenstand 2 aufgrund seiner Gewichtskraft zu der flexiblen Zwischenabdeckung 8, das im Steigabschnitt 6 auseinandergezogen und/oder gestreckt ist, geführt sein oder werden, vgl. z.B. Fig. 5. Die flexible Zwischenabdeckung 8 kann den Gegenstand 2 seitlich kontaktieren und/oder stützen. Damit kann sich ein besonders sicherer Transport eines Gegenstands 2 im Steigabschnitt 6 ergeben. Das Lastaufnahmemittel 4 kann in dem Steigabschnitt 6 zumindest abschnittsweise, und/oder zumindest zeitweise geneigt sein oder werden.

In einigen Ausführungsformen kann vorgesehen sein, dass im Gefälleabschnitt 14 eines, mehrere oder alle der Lastaufnahmemittel 4 um einen Neigungswinkel α geneigt sein oder werden können, der betragsmäßig größer als der Gefällewinkel γ des Gefälleabschnitt 14 sein kann. Im Gefälleabschnitt 14 kann eines, mehrere oder alle Lastaufnahmemittel entgegen der Transportrichtung T geneigt sein oder werden. Im Gefälleabschnitt 14 kann eines, mehrere oder alle Lastaufnahmemittel entgegen der Richtung des Gefälles geneigt sein oder werden. Ist ein Lastaufnahmemittel 4 im Gefälleabschnitt 14 um einen Neigungswinkel α geneigt, der betragsmäßig größer als der Gefällewinkel γ ist, so kann ein von dem Lastaufnahmemittel 4 transportierter Gegenstand 2 aufgrund seiner Gewichtskraft zu der flexiblen Zwischenabdeckung 8, das im Gefälleabschnitt 14 auseinandergezogen und/oder gestreckt ist, geführt sein oder werden, vgl. z.B. Fig. 6. Die flexible Zwischenabdeckung 8 kann den Gegenstand 2 seitlich kontaktieren und/oder stützen. Damit kann sich ein besonders sicherer Transport eines Gegenstands 2 im Gefälleabschnitt 14 ergeben. Das Lastaufnahmemittel 4 kann in dem Gefälleabschnitt 14 zumindest abschnittsweise, und/oder zumindest zeitweise geneigt sein oder werden.

Es kann vorgesehen sein, dass das Lastaufnahmemittel 4 nach dem Steigabschnitt 6 und/oder dem Gefälleabschnitt zeitweise und/oder abschnittsweise derart geneigt ist oder wird, dass ein transportierter Gegenstand 2 mittig zurückgeführt ist oder wird.

In einigen Ausführungsformen kann der Steigesorter 1 eine Erfassungseinheit 15 aufweisen. Die Erfassungseinheit 15 kann eine Kamera, beispielsweise eine optische Kamera, sein oder aufweisen. Die Erfassungseinheit 15 kann dazu eingerichtet sein, einen mit einem Lastaufnahmemittel 4 transportierten Gegenstand 2 zu erfassen. Die Erfassungseinheit 15 kann entsprechend angeordnet sein. Beispielsweise kann die Erfassungseinheit 15 eine Position eines Gegenstands 2 auf einem Lastaufnahmemittel 4 und/oder im flexiblen Bereich 8 bzw. der Mulde 9 erfassen. Anhand der von der Erfassungseinheit 15 erfassten Daten und/Information kann beispielsweise bestimmt werden, ob ein Gegenstand 2 zumindest teilweise in einer Mulde 9 aufgenommen ist und/oder über die flexible Zwischenabdeckung 8 übersteht und/oder dieses überdeckt. Es kann vorgesehen sein, dass in Abhängigkeit der von der Erfassungseinheit 15 erfassten Daten und/oder Information, insbesondere der Position eines Gegenstands 2, eines oder mehrerer Lastaufnahmemittel 4, beispielsweise das oder die den Gegenstand 2 transportieren der Lastaufnahmemittel 4 und/oder diejenigen Lastaufnahmemittel, zwischen denen der entsprechende flexible Bereich 8 und/oder die entsprechende Mulde 9 angeordnet ist, zumindest abschnittsweise und/oder zeitweise geneigt sind oder werden. Damit kann ein Gegenstand 2 beispielsweise zu einem Lastaufnahmemittel 4 zurückgeführt sein oder werden.

### Bezugszeichenliste:

- 1: Steigesorter
- 2: Gegenstand
- 3: Laufschiene
- 4: Lastaufnahmemittel
- 5: Flachabschnitt
- 6: Steigabschnitt
- 7: Fahrwagen
- 8: flexible Zwischenabdeckung
- 9: Mulde
- 10: Gurtförderer
- 11: Tuch
- 12: Befestigungsschiene
- 13: Neigungsvorrichtung
- 14: Gefälleabschnitt
- 15: Erfassungseinheit
- 100: Treppenstruktur

- T: Transportrichtung
- H1: erste Höhe
- H2: zweite Höhe
- H3: dritte Höhe
- H4: vierte Höhe

- α: Neigungswinkel
- β: Steigungswinkel
- γ: Gefällewinkel

## Patentansprüche

1. Steigesorter (1) zum Transport von Gegenständen (2) wobei der Steigesorter (1) eine Laufschiene (3) und eine Mehrzahl entlang der Laufschiene (3) in eine Transportrichtung (T) verfahrbare Lastaufnahmemittel (4) aufweist, wobei der Steigesorter (1) einen Steigabschnitt (6), in dem die Laufschiene (3) in Transportrichtung (T) von einer ersten Höhe (H1) auf eine zweite Höhe (H2), die über der ersten Höhe (H1) liegt, geführt ist, und/oder einen Gefälleabschnitt (14), in dem die Laufschiene (3) in Transportrichtung (T) von einer dritten Höhe (H3) auf eine vierte Höhe (H4), die unter der dritten Höhe (H3) liegt, geführt ist, aufweist, **dadurch gekennzeichnet, dass** zwischen zwei aufeinanderfolgenden Lastaufnahmemitteln (4) eine flexible Zwischenabdeckung (8) angeordnet und an diesen befestigt ist, wobei die Lastaufnahmemittel (4) mit der flexiblen Zwischenabdeckung (8) in dem Steigabschnitt (6) und/oder dem Gefälleabschnitt (14) eine Treppenstruktur (100) bilden.

2. Steigesorter (1) nach Anspruch 1, der einen Flachabschnitt (5), in dem die Laufschiene (3) im Wesentlichen flach verläuft, aufweist, wobei die flexible Zwischenabdeckung (8) durchhängt und/oder eine Mulde (9) bildet, wenn sich die zwei Lastaufnahmemittel (4) in dem Flachabschnitt (5) befinden, und die flexible Zwischenabdeckung (8) auseinandergezogen ist, wenn sich die zwei Lastaufnahmemittel (4) im Steigabschnitt (6) und/oder im Gefälleabschnitt (14) befinden.

3. Steigesorter (1) nach Anspruch 2, bei dem die flexible Zwischenabdeckung (8) dazu eingerichtet ist, bei oder nach dem Übergang zwischen Flachabschnitt (5) und Steigabschnitt (6) einen zumindest teilweise in der flexiblen Zwischenabdeckung (8) aufgenommenen Gegenstand (2) oder einen zumindest teilweise über die flexible Zwischenabdeckung (8) überstehenden Gegenstand (2) auf das der flexiblen Zwischenabdeckung (8) in Transportrichtung (T) nachgelagerte Lastaufnahmemittel (4) zu schieben.

4. Steigesorter (1) nach einem der vorangegangenen Ansprüche 1 bis 3, bei dem das Lastaufnahmemittel (4) einen Gurtförderer (10) quer zur Laufschiene (3) und/oder Transportrichtung (T), oder eine Kippschale aufweist.

5. Steigesorter (1) nach einem der vorangegangenen Ansprüche, bei dem die flexible Zwischenabdeckung (8) ein Tuch (11), ein Stoffelement, und/ oder ein Kunststoffelement ist oder aufweist.

6. Steigesorter (1) nach einem der vorangegangenen Ansprüche, bei dem die flexible Zwischenabdeckung (8) derart dimensioniert ist, dass es die Laufschiene (3) nicht berührt, wenn die flexible Zwischenabdeckung (8) durchhängt und/oder eine Mulde (9) bildet, und/oder wobei die flexible Zwischenabdeckung (8) in Steigabschnitt (6) gespannt und/oder im Wesentlichen vertikal ausgerichtet ist.

7. Steigesorter (1) nach einem der vorangegangenen Ansprüche, bei dem die flexible Zwischenabdeckung (8) quer zur Transportrichtung (T) und/oder parallel zu den Lastaufnahmemitteln derart dimensioniert ist, dass die flexible Zwischenabdeckung (8) die Laufschiene (3) überdeckt.

8. Steigesorter (1) nach einem der vorangegangenen Ansprüche, bei dem mindestens eines der Lastaufnahmemittel (4) eine Befestigungsschiene (12) aufweist, an oder mit der die flexible Zwischenabdeckung (8) befestigt ist.

9. Steigesorter (1) nach einem der vorangegangenen Ansprüche, bei dem mindestens eines der Lastaufnahmemittel (4) eine Aufwickelvorrichtung und/oder eine Spannvorrichtung aufweist, an oder mit der die flexible Zwischenabdeckung (8) befestigt ist, so dass die flexible Zwischenabdeckung (8) zumindest teilweise aufwickelbar und/oder abwickelbar, und/oder spannbar, ist.

10. Steigesorter (1) nach einem der vorangegangenen Ansprüche, bei dem mindestens eines der Lastaufnahmemittel (4) einen Lastsensor aufweist, der dazu eingerichtet ist, eine auf die flexible Zwischenabdeckung (8) wirkende Kraft zu erfassen.

11. Steigesorter (1) nach einem der vorangegangenen Ansprüche, bei dem mindestens eines der Lastaufnahmemittel (4) eine Neigungsvorrichtung (13) aufweist, mit der das Lastaufnahmemittel (4) um eine Achse quer zur Transportrichtung (T) verschwenkbar oder neigbar ist.

12. Steigesorter (1) nach einem der vorangegangenen Ansprüche, bei dem mindestens eines der Lastaufnahmemittel (4) zumindest zeitweise und/oder abschnittsweise in Transportrichtung (T) geneigt ist, wenn sich das Lastaufnahmemittel (4) in einem Abschnitt vor dem Steigabschnitt (6) befindet.

13. Steigesorter (1) nach einem der vorangegangenen Ansprüche, bei dem mindestens eines der Lastaufnahmemittel (4) im Steigabschnitt (6) zumindest zeitweise und/oder abschnittsweise zu der Steigung geneigt und/oder in Transportrichtung (T) geneigt ist.

14. Steigesorter (1) nach einem der vorangegangenen Ansprüche, wobei mindestens eines der Lastaufnahmemittel (4) im Gefälleabschnitt (14) zumindest zeitweise und/oder abschnittsweise entgegen dem Gefälle geneigt und/oder entgegen der Transportrichtung (T) geneigt ist.

15. Steigsorter nach einem der vorangegangenen Ansprüche, der eine Erfassungseinheit aufweist, die dazu eingerichtet ist, einen von einem Lastaufnahmemittel (4) transportierten Gegenstand (2) zu erfassen.

16. Steigsorter nach Anspruch 15, bei dem das Lastaufnahmemittel (4) dazu eingerichtet ist, sich in Abhängigkeit der von der Erfassungseinheit erfassten Informationen zu neigen.

17. Verfahren zum Transportieren von Gegenständen (2) mit einem Steigsorter (1) nach einem der vorangegangenen Ansprüche 1 bis 16, wobei das Verfahren die Schritte umfasst:
- Bereitstellen eines Gegenstands (2) auf einem Lastaufnahmemittel (4) und/oder zumindest teilweise in einer Mulde (9) einer flexiblen Zwischenabdeckung (8), die zwischen dem Lastaufnahmemittel (4) und einem weiteren Lastaufnahmemittel (4), das dem Lastaufnahmemittel (4) in Transportrichtung (T) vorgelagert ist, angeordnet ist;
- Verfahren des weiteren Lastaufnahmemittels (4) in einen Steigabschnitt (6) des Steigsorters (1), wobei beim Verfahren des weiteren Lastaufnahmemittels (4) in dem Steigabschnitt (6) die flexible Zwischenabdeckung (8) auseinandergezogen wird;- Schieben des Gegenstands (2) entgegen der Transportrichtung (T) auf das und/oder zu dem Lastaufnahmemittel (4), wenn der Gegenstand (2) zumindest teilweise von dem Lastaufnahmemittel (4) über die Mulde (9) übersteht und/oder zumindest teilweise in der Mulde (9) bereitgestellt ist.

18. Verfahren nach Anspruch 17, bei dem beim Verfahren des Lastaufnahmemittels (4) in dem Steigabschnitt (6) das Lastaufnahmemittel (4) zumindest zeitweise und/oder abschnittsweise zu der Steigung und/oder in Transportrichtung (T) geneigt wird.

19. Verfahren nach einem der vorangegangenen Ansprüche 17 oder 18, bei dem die flexible Zwischenabdeckung (8) beim Verfahren des weiteren Lastaufnahmemittels (4) und/oder des Lastaufnahmemittels (4) in einem Gefälleabschnitt (14) des Steigsorters (1) auseinandergezogen wird.

20. Verfahren nach einem der vorangegangenen Ansprüche 17 bis 19, bei dem das Lastaufnahmemittel (4) in einem oder dem Gefälleabschnitt (14) des Steigsorters (1) zumindest zeitweise und/oder abschnittsweise entgegen dem Gefälle und/oder entgegen der Transportrichtung (T) geneigt wird.

21. Verfahren nach einem der vorangegangenen Ansprüche 17 bis 20, bei dem die flexible Zwischenabdeckung (8) durch eine Aufwickelvorrichtung und/oder Spannvorrichtung des Lastaufnahmemittels (4) und/oder des weiteren Lastaufnahmemittels (4) aufgewickelt und/oder gespannt wird.

## Claims

1. Climbing sorter (1) for transporting objects (2), wherein the climbing sorter (1) has a running rail (3) and a plurality of load-receiving means (4) which can be moved along the running rail (3) in a transport direction (T), wherein the climbing sorter (1) has a climbing section (6), in which the running rail (3) is guided in the transport direction (T) from a first height (H1) to a second height (H2) which lies above the first height (H1), and/or a descending section (14), in which the running rail (3) is guided in the transport direction (T) from a third height (H3) to a fourth height (H4) which lies below the third height (H3), **characterized in that** a flexible intermediate cover (8) is arranged between two successive load-receiving means (4) and is fastened thereto, wherein the load-receiving means (4) form a staircase structure (100) with the flexible intermediate cover (8) in the climbing section (6) and/or the descending section (14).

2. Climbing sorter (1) according to claim 1, which has a flat section (5), in which the running rail (3) runs substantially flat, wherein the flexible intermediate cover (8) sags and/or forms a trough (9) when the two load-receiving means (4) are located in the flat section (5), and the flexible intermediate cover (8) is pulled apart when the two load-receiving means (4) are located in the climbing section (6) and/or in the descending section (14).

3. Climbing sorter (1) according to claim 2, in which the flexible intermediate cover (8) is configured to push, during or after the transition between the flat section (5) and the climbing section (6), an object (2) which is at least partially received in the flexible intermediate cover (8) or an object (2) which projects at least partially beyond the flexible intermediate cover (8) onto the load-receiving means (4) which is arranged downstream of the flexible intermediate cover (8) in the transport direction (T).

4. Climbing sorter (1) according to one of the preceding claims 1 to 3, in which the load-receiving means (4) has a belt conveyor (10) transversely with respect to the running rail (3) and/or the transport direction (T), or a tilting tray.

5. Climbing sorter (1) according to one of the preceding claims, in which the flexible intermediate cover (8) is or has a cloth (11), a fabric element and/or a plastic element.

6. Climbing sorter (1) according to one of the preceding claims, in which the flexible intermediate cover (8) is dimensioned such that it does not touch the running rail (3) when the flexible intermediate cover (8) sags and/or forms a trough (9), and/or wherein the flexible intermediate cover (8) is tensioned in the climbing section (6) and/or is oriented substantially vertically.

7. Climbing sorter (1) according to one of the preceding claims, in which the flexible intermediate cover (8) is dimensioned transversely with respect to the transport direction (T) and/or parallel to the load-receiving means such that the flexible intermediate cover (8) covers the running rail (3).

8. Climbing sorter (1) according to one of the preceding claims, in which at least one of the load-receiving means (4) has a fastening rail (12), to or with which the flexible intermediate cover (8) is fastened.

9. Climbing sorter (1) according to one of the preceding claims, in which at least one of the load-receiving means (4) has a winding-up device and/or a tensioning device, to or with which the flexible intermediate cover (8) is fastened, such that the flexible intermediate cover (8) can be at least partially wound up and/or unwound and/or tensioned.

10. Climbing sorter (1) according to one of the preceding claims, in which at least one of the load-receiving means (4) has a load sensor which is configured to detect a force acting on the flexible intermediate cover (8).

11. Climbing sorter (1) according to one of the preceding claims, in which at least one of the load-receiving means (4) has an inclination device (13), with which the load-receiving means (4) can be pivoted or inclined about an axis transversely with respect to the transport direction (T).

12. Climbing sorter (1) according to one of the preceding claims, in which at least one of the load-receiving means (4) is inclined at least temporarily and/or in sections in the transport direction (T) when the load-receiving means (4) is located in a section in front of the climbing section (6).

13. Climbing sorter (1) according to one of the preceding claims, in which at least one of the load-receiving means (4) is inclined at least temporarily and/or in sections with respect to the slope in the climbing section (6) and/or is inclined in the transport direction (T).

14. Climbing sorter (1) according to one of the preceding claims, at least one of the load-receiving means (4) is inclined at least temporarily and/or in sections counter to the slope in the slope section (14) and/or is inclined counter to the transport direction (T).

15. Climbing sorter according to one of the preceding claims, which has a detection unit which is configured to detect an object (2) transported by a load-receiving means (4).

16. Climbing sorter according to claim 15, in which the load-receiving means (4) is configured to incline as a function of the information detected by the detection unit.

17. Method for transporting objects (2) with a climbing sorter (1) according to one of the preceding claims 1 to 16, the method comprising the steps:
- providing an object (2) on a load-receiving means (4) and/or at least partially in a trough (9) of a flexible intermediate cover (8) which is arranged between the load-receiving means (4) and a further load-receiving means (4) which is arranged upstream of the load-receiving means (4) in the transport direction (T);
- moving the further load-receiving means (4) into a climbing section (6) of the climbing sorter (1), wherein, during the movement of the further load-receiving means (4) in the climbing section (6), the flexible intermediate cover (8) is pulled apart;
- pushing the object (2) counter to the transport direction (T) onto and/or with respect to the load-receiving means (4) when the object (2) projects at least partially from the load-receiving means (4) beyond the trough (9) and/or is provided at least partially in the trough (9).

18. Method according to claim 17, in which, during the movement of the load-receiving means (4) in the climbing section (6), the load-receiving means (4) is inclined at least temporarily and/or in sections with respect to the slope and/or in the transport direction (T).

19. Method according to one of the preceding claims 17 or 18, in which the flexible intermediate cover (8) is pulled apart during the movement of the further load-receiving means (4) and/or of the load-receiving means (4) in a descending section (14) of the climbing sorter (1).

20. Method according to one of the preceding claims 17 to 19, in which the load-receiving means (4) is inclined at least temporarily and/or in sections counter to the slope and/or counter to the transport direction (T) in a or the descending section (14) of the climbing sorter (1).

21. Method according to one of the preceding claims 17 to 20, in which the flexible intermediate cover (8) is wound up and/or tensioned by a winding-up device and/or tensioning device of the load-receiving means (4) and/or of the further load-receiving means (4).

## Revendications

1. Dispositif de triage à montée (1) pour le transport d'objets (2), le dispositif de triage à montée (1) présentant un rail de roulement (3) et une pluralité de moyens de réception de charge (4) déplaçables le long du rail de roulement (3) dans une direction de transport (T), le dispositif de triage à montée (1) présentant une section de montée (6), dans laquelle le rail de roulement (3) est guidé dans la direction de transport (T) d'une première hauteur (H1) à une deuxième hauteur (H2), qui se situe au-dessus de la première hauteur (H1), et/ou une section de descente (14), dans laquelle le rail de roulement (3) est guidé dans la direction de transport (T) d'une troisième hauteur (H3) à une quatrième hauteur (H4), qui se situe en dessous de la troisième hauteur (H3), **caractérisé en ce qu'**un recouvrement intermédiaire flexible (8) est disposé entre deux moyens de réception de charge (4) successifs et est fixé à ceux-ci, les moyens de réception de charge (4) formant avec le recouvrement intermédiaire flexible (8) dans la section de montée (6) et/ou la section de descente (14) une structure d'escalier (100).

2. Dispositif de triage à montée (1) selon la revendication 1, qui présente une section plate (5), dans laquelle le rail de roulement (3) s'étend sensiblement à plat, le recouvrement intermédiaire flexible (8) étant suspendu et/ou formant une cavité (9) lorsque les deux moyens de réception de charge (4) se trouvent dans la section plate (5), et le recouvrement intermédiaire flexible (8) étant écarté lorsque les deux moyens de réception de charge (4) se trouvent dans la section de montée (6) et/ou dans la section de descente (14).

3. Dispositif de triage à montée (1) selon la revendication 2, dans lequel le recouvrement intermédiaire flexible (8) est conçu pour pousser, pendant ou après la transition entre la section plate (5) et la section de montée (6), un objet (2) reçu au moins en partie dans le recouvrement intermédiaire flexible (8) ou un objet (2) dépassant au moins en partie du recouvrement intermédiaire flexible (8) sur le moyen de réception de charge (4) monté en aval du recouvrement intermédiaire flexible (8) dans la direction de transport (T).

4. Dispositif de triage à montée (1) selon l'une quelconque des revendications précédentes 1 à 3, dans lequel le moyen de réception de charge (4) présente un transporteur à courroie (10) transversalement au rail de roulement (3) et/ou à la direction de transport (T), ou une coque basculante.

5. Dispositif de triage à montée (1) selon l'une quelconque des revendications précédentes, dans lequel le recouvrement intermédiaire flexible (8) est ou présente une toile (11), un élément en tissu et/ou un élément en plastique.

6. Dispositif de triage à montée (1) selon l'une quelconque des revendications précédentes, dans lequel le recouvrement intermédiaire flexible (8) est dimensionné de telle sorte qu'il ne touche pas le rail de roulement (3) lorsque le recouvrement intermédiaire flexible (8) est suspendu et/ou forme une cavité (9), et/ou le recouvrement intermédiaire flexible (8) étant tendu dans la section de montée (6) et/ou étant orienté sensiblement verticalement.

7. Dispositif de triage à montée (1) selon l'une quelconque des revendications précédentes, dans lequel le recouvrement intermédiaire flexible (8) est dimensionné transversalement à la direction de transport (T) et/ou parallèlement aux moyens de réception de charge de telle sorte que le recouvrement intermédiaire flexible (8) recouvre le rail de roulement (3).

8. Dispositif de triage à montée (1) selon l'une quelconque des revendications précédentes, dans lequel au moins l'un des moyens de réception de charge (4) présente un rail de fixation (12) sur ou avec lequel le recouvrement intermédiaire flexible (8) est fixé.

9. Dispositif de triage à montée (1) selon l'une quelconque des revendications précédentes, dans lequel au moins l'un des moyens de réception de charge (4) présente un dispositif d'enroulement et/ou un dispositif de tension sur ou avec lequel le recouvrement intermédiaire flexible (8) est fixé, de sorte que le recouvrement intermédiaire flexible (8) peut être enroulé et/ou déroulé et/ou tendu au moins en partie.

10. Dispositif de triage à montée (1) selon l'une quelconque des revendications précédentes, dans lequel au moins l'un des moyens de réception de charge (4) présente un capteur de charge qui est conçu pour détecter une force agissant sur le recouvrement intermédiaire flexible (8).

11. Dispositif de triage à montée (1) selon l'une quelconque des revendications précédentes, dans lequel au moins l'un des moyens de réception de charge (4) présente un dispositif d'inclinaison (13) avec lequel le moyen de réception de charge (4) peut être pivoté ou incliné autour d'un axe transversalement à la direction de transport (T).

12. Dispositif de triage à montée (1) selon l'une quelconque des revendications précédentes, dans lequel au moins l'un des moyens de réception de charge (4) est incliné au moins temporairement et/ou par sections dans la direction de transport (T) lorsque le moyen de réception de charge (4) se trouve dans une section avant la section de montée (6).

13. Dispositif de triage à montée (1) selon l'une quelconque des revendications précédentes, dans lequel au moins l'un des moyens de réception de charge (4) est incliné dans la section de montée (6) au moins temporairement et/ou par sections par rapport à la pente et/ou est incliné dans la direction de transport (T).

14. Dispositif de triage à montée (1) selon l'une quelconque des revendications précédentes, lequel au moins l'un des moyens de réception de charge (4) est incliné dans la section de descente (14) au moins temporairement et/ou par sections à l'encontre de la pente et/ou est incliné à l'encontre de la direction de transport (T).

15. Dispositif de triage à montée selon l'une quelconque des revendications précédentes, qui présente une unité de détection qui est conçue pour détecter un objet (2) transporté par un moyen de réception de charge (4).

16. Dispositif de triage à montée selon la revendication 15, dans lequel le moyen de réception de charge (4) est conçu pour s'incliner en fonction des informations détectées par l'unité de détection.

17. Procédé de transport d'objets (2) avec un dispositif de triage à montée (1) selon l'une quelconque des revendications précédentes 1 à 16, le procédé comprenant les étapes suivantes :
- fourniture d'un objet (2) sur un moyen de réception de charge (4) et/ou au moins en partie dans une cavité (9) d'un recouvrement intermédiaire flexible (8) qui est disposé entre le moyen de réception de charge (4) et un autre moyen de réception de charge (4) qui est monté en amont du moyen de réception de charge (4) dans la direction de transport (T) ;
- déplacement de l'autre moyen de réception de charge (4) dans une section de montée (6) du dispositif de triage à montée (1), le recouvrement intermédiaire flexible (8) étant écarté lors du déplacement de l'autre moyen de réception de charge (4) dans la section de montée (6) ;
- poussée de l'objet (2) à l'encontre de la direction de transport (T) sur et/ou vers le moyen de réception de charge (4) lorsque l'objet (2) dépasse au moins en partie du moyen de réception de charge (4) au-dessus de la cavité (9) et/ou est fourni au moins en partie dans la cavité (9).

18. Procédé selon la revendication 17, dans lequel, lors du déplacement du moyen de réception de charge (4) dans la section de montée (6), le moyen de réception de charge (4) est incliné au moins temporairement et/ou par sections par rapport à la pente et/ou dans la direction de transport (T).

19. Procédé selon l'une quelconque des revendications précédentes 17 ou 18, dans lequel le recouvrement intermédiaire flexible (8) est écarté lors du déplacement de l'autre moyen de réception de charge (4) et/ou du moyen de réception de charge (4) dans une section de descente (14) du dispositif de triage à montée (1).

20. Procédé selon l'une quelconque des revendications précédentes 17 à 19, dans lequel le moyen de réception de charge (4) est incliné dans une ou la section de descente (14) du dispositif de triage à montée (1) au moins temporairement et/ou par sections à l'encontre de la pente et/ou à l'encontre de la direction de transport (T).

21. Procédé selon l'une quelconque des revendications précédentes 17 à 20, dans lequel le recouvrement intermédiaire flexible (8) est enroulé et/ou tendu par un dispositif d'enroulement et/ou un dispositif de tension du moyen de réception de charge (4) et/ou de l'autre moyen de réception de charge (4).
